# EUROPEAN PATENT APPLICATION

(11) **EP 2 990 843 A1**
(43) Date of publication of application: **02.03.2016**
(21) Application number: 14807167.3
(22) Date of filing: 31.03.2014
(51) Int. Cl.: G02B 6/122, G02B 6/42, H01L 31/0232, H01S 5/022

(54) **OPTO-ELECTRIC HYBRID MODULE**

(30) Priority: 07.06.2013 JP 2013120846
(71) Applicant: Nitto Denko Corporation, Ibaraki-shi, Osaka 567-8680 (JP)
(72) Inventor: TANAKA Naoyuki, Ibaraki-shi, Osaka 567-8680 (JP); SHIBATA Naoki, Ibaraki-shi, Osaka 567-8680 (JP); TSUJITA Yuichi, Ibaraki-shi, Osaka 567-8680 (JP); MASUDA Shotaro, Ibaraki-shi, Osaka 567-8680 (JP)
(74) Representative: Hoffmann Eitle
(86) International application number: PCT/JP2014/059398
(87) International publication number: WO 2014/196251

(57) **Abstract**

An opto-electric hybrid module is provided, which is configured so that no air bubbles are present in a sealing resin which seals a space defined between an optical waveguide and an optical element. In the opto-electric hybrid module, an electric circuit 4 is provided directly on an over-cladding layer 3 of the optical waveguide W, and the optical element 5 is provided on predetermined portions (mounting pads 4a) of the electric circuit 4. The over-cladding layer 3 has a projection which covers a core 2, and a center portion of the optical element 5 is positioned above the projection with the intervention of a sealing resin 6.

## Description

### TECHNICAL FIELD

The present invention relates to an opto-electric hybrid module which includes an optical waveguide, an electric circuit provided directly on the optical waveguide, an optical element mounted on the electric circuit and a sealing resin which seals a space defined between the optical waveguide and the optical element.

### BACKGROUND ART

Opto-electric hybrid modules are typically produced by: individually producing an electric circuit unit including an electric circuit provided on a surface of a substrate, and an optical waveguide including an under-cladding layer, a core and an over-cladding layer stacked in this order; bonding a back surface of the substrate of the electric circuit unit to a surface of the over-cladding layer of the optical waveguide with an adhesive agent; mounting an optical element on a portion of the electric circuit unit associated with a light reflection surface (light path deflecting surface) of the core of the optical waveguide; and sealing a space defined between the optical element and the electric circuit unit with a sealing resin for protection of the optical element.

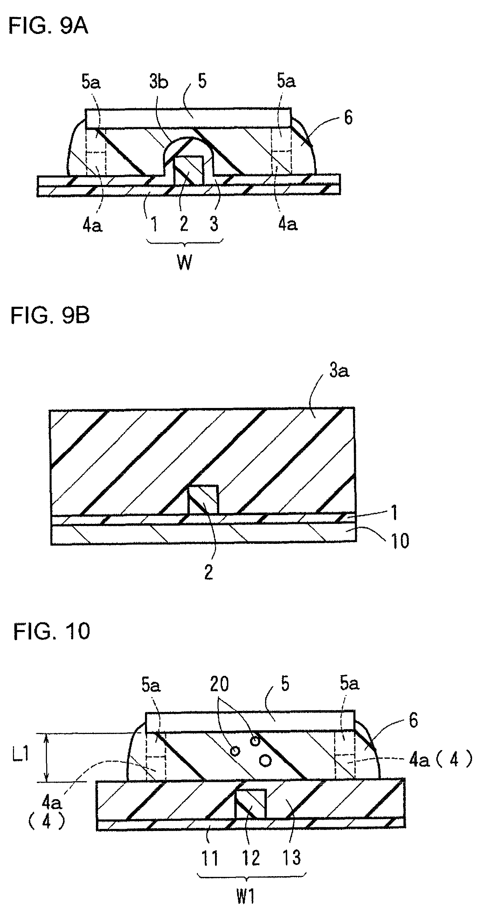

An opto-electric hybrid module as shown in a transverse sectional view of FIG. 10 (see, for example, PTL1) is proposed, which includes an electric circuit 4 provided directly on a surface of an over-cladding layer 13 of an optical waveguide W1 for simplification of the production method thereof. In the module, a sealing resin 6 is provided between an optical element 5 and the over-cladding layer 13. In FIG. 10, a reference character 11 designates an under-cladding layer of the optical waveguide W1, and a reference character 12 designates a core of the optical waveguide W1.

### RELATED ART DOCUMENT

### PATENT DOCUMENT

PTL1: JP-A-2007-156026

### SUMMARY OF INVENTION

In the prior-art opto-electric hybrid module described above, however, air bubbles 20 are liable to be present in the sealing resin 6. In the presence of the air bubbles 20 in the sealing resin 6, light transmitted through the sealing resin 6 is refracted or irregularly reflected on interfaces between the sealing resin 6 and the air bubbles 20. This prevents the light from being properly transmitted through the sealing resin 6, thereby reducing the light transmission efficiency.

The inventors of the present invention investigated the cause of the presence of the air bubbles 20, for example, in relation to PTL1 (and other prior arts). As a result, the inventors found that this is because the space in which the sealing resin 6 is provided between the over-cladding layer 13 and the optical element 5 has a relatively great size. In the prior-art opto-electric hybrid module, the over-cladding layer 13 has a flat surface portion in association with an optical element mounting portion, and the electric circuit 4 is provided on the flat surface portion. The optical element 5 is mounted on mounting pads 4a of the electric circuit 4. Therefore, the surface of the over-cladding layer 13 and a lower surface of the optical element 5 are spaced from each other by a distance L1 that is equal to the sum of the thickness of the electric circuit 4 and the thickness of electrodes 5a of the optical element 5. The distance L1 is typically 25 to 150 µm.

The sealing resin 6 is formed by injecting a liquid resin (a material for the sealing resin) from a peripheral edge of the mounting portion by means of a liquid supplying device such as a pipette, filling the space defined between the surface of the over-cladding layer 13 and the optical element 5 with the liquid resin by a capillary phenomenon, and curing the liquid resin by heat or the like. Since the space defined between the surface of the over-cladding layer 13 and the optical element 5 has a relatively great size, the liquid resin first fills a peripheral portion and then a center portion of the space defined between the surface of the over-cladding layer 13 and the optical element 5. Therefore, air is liable to remain in the center portion and, in this state, the liquid resin is cured, whereby the air is confined in the form of air bubbles 20 in the sealing resin 6. The optical element 5 generally has a light emitting portion or a light receiving portion provided in its center portion. Therefore, light emitted from the light emitting portion or light to be received by the light receiving portion is liable to be refracted or irregularly reflected on the interfaces between the sealing resin 6 and the air bubbles 20 as described above.

In view of the foregoing, it is an object of the present invention to provide an opto-electric hybrid module configured so that no air bubbles are present in a sealing resin which seals a space defined between an optical waveguide and an optical element.

According to the present invention to achieve the above object, there is provided an opto-electric hybrid module, which includes: an optical waveguide; an electric circuit provided directly on the optical waveguide; an optical element mounted on the electric circuit; and a sealing resin which seals a space defined between the optical element and the optical waveguide; wherein the optical waveguide includes an under-cladding layer, a linear light-path core provided on a surface of the under-cladding layer as projecting from the surface of the under-cladding layer, and an over-cladding layer having a portion which covers side surfaces and a top surface of the projecting core; wherein the optical waveguide has a projecting portion; and wherein the optical element is positioned above a portion of the over-cladding layer which covers the top surface of the core, and spaced a predetermined distance from the portion of the over-cladding layer.

In the inventive opto-electric hybrid module, the over-cladding layer has the portion which covers the side surfaces and the top surface of the core projecting from the surface of the under-cladding layer, thereby the optical waveguide has a projection in shape. Then, the optical element is positioned above the portion of the over-cladding layer which covers the top surface of the core and spaced the predetermined distance from the portion of the over-cladding layer. Therefore, a smaller space is defined between the optical element and the portion of the over-cladding layer which covers the top surface of the core. When a liquid resin (a material for the sealing resin) is injected from a peripheral portion of an optical element mounting portion in this state, the peripheral portion of the mounting portion and the smaller space above the core are substantially simultaneously filled with the liquid resin by a capillary phenomenon. That is, the smaller space is not filled at the final stage of the liquid resin injection. Thus, the provision of the smaller space prevents air from intruding into the liquid resin present in the smaller space, so that no air bubbles are present in the liquid resin. As a result, the unwanted light refraction and irregular light reflection in the sealing resin are prevented, whereby the light can be properly transmitted through the sealing resin to increase the light transmission efficiency.

### BRIEF DESCRIPTION OF DRAWINGS

FIGS. 1A, 1B and 1C are a perspective view, a longitudinal sectional view and a transverse sectional view, respectively, schematically illustrating an opto-electric hybrid module according to a first embodiment of the present invention.
FIG. 2A is a schematic diagram for explaining a method of forming an under-cladding layer of an optical waveguide of the opto-electric hybrid module, and FIG. 2B is a schematic diagram for explaining a method of forming a core of the optical waveguide.
FIGS. 3A to 3C are schematic diagrams for explaining a method of forming an over-cladding layer of the optical waveguide.
FIG. 4A is a schematic diagram for explaining a method of forming an electric circuit of the opto-electric hybrid module, and FIG. 4B is a schematic diagram for explaining a method of forming a cover-lay of the opto-electric hybrid module.
FIG. 5A is a schematic diagram for explaining a method of forming a light reflecting surface on the core, and FIG. 5B is a schematic diagram for explaining a method of mounting an optical element of the opto-electric hybrid module.
FIGS. 6A to 6C are schematic diagrams for explaining a method of forming a sealing resin between the optical waveguide and the optical element.
FIG. 7 is a transverse sectional view schematically illustrating an opto-electric hybrid module according to a second embodiment of the present invention.
FIG. 8 is a transverse sectional view schematically illustrating an opto-electric hybrid module according to a third embodiment of the present invention.
FIG. 9A is a transverse sectional view schematically showing a modification of the over-cladding layer, and FIG. 9B is a schematic diagram for explaining a method of forming the modification of the over-cladding layer.
FIG. 10 is a transverse sectional view schematically illustrating a prior-art opto-electric hybrid module.

### DESCRIPTION OF EMBODIMENTS

Embodiments of the present invention will hereinafter be described in detail based on the attached drawings.

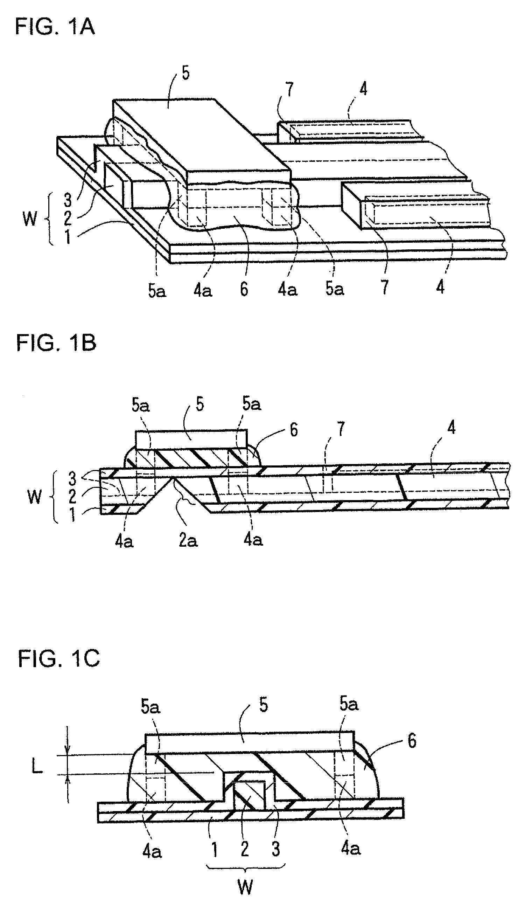

FIGS. 1A, 1B and 1C are a perspective view, a longitudinal sectional view and a transverse sectional view, respectively, schematically illustrating an end portion (major portion) of an opto-electric hybrid module according to a first embodiment of the present invention. In the opto-electric hybrid module according to this embodiment, an electric circuit 4 is provided directly on an over-cladding layer 3 of an optical waveguide W, and an optical element 5 is mounted on predetermined portions (mounting pads 4a) of the electric circuit 4. The over-cladding layer 3 has a projection portion which covers a core 2 of the optical waveguide W, and a center portion of the optical element 5 is positioned above the projection of the over-cladding layer 3 with the intervention of a sealing resin 6.

More specifically, the optical waveguide W includes an under-cladding layer 1 having a flat surface, a linear light-path core 2 projecting from the surface of the under-cladding layer 1 and having a quadrilateral section, and an over-cladding layer 3 provided on side surfaces and a top surface of the projecting core 2 and a surface portion of the under-cladding layer 1, excluding a core formation portion, to cover the under-cladding layer 1 and the core 2. That is, the over-cladding layer 3 has a flat portion covering the under-cladding layer 1, and a projection portion covering the core 2 as described above. The core 2 has a light reflecting surface 2a disposed below a center portion of the optical element 5 and inclined at 45 degrees with respect to an axis of the core 2. The light reflecting surface 2a reflects light to deflect a light path, so that the light can be transmitted between the core 2 and the optical element 5.

The electric circuit 4 is provided on surfaces of the flat portion present on opposite sides of the projection of the over-cladding layer 3. The optical element 5 is mounted on the electric circuit 4 with lower end surfaces of its electrodes 5a in abutment against top surfaces of predetermined portions (mounting pads 4a) of the electric circuit 4. A top surface of the projection of the over-cladding layer 3 is spaced a distance L of 0.1 to 20 µm from a lower surface of the center portion of the optical element 5. No air bubbles are present in the sealing resin 6 provided between the over-cladding layer 3 and the optical element 5. A portion of the electric circuit 4 excluding an optical element mounting portion (mounting pads 4a) is covered with a cover-lay 7.

The opto-electric hybrid module may be produced, for example, in the following manner.

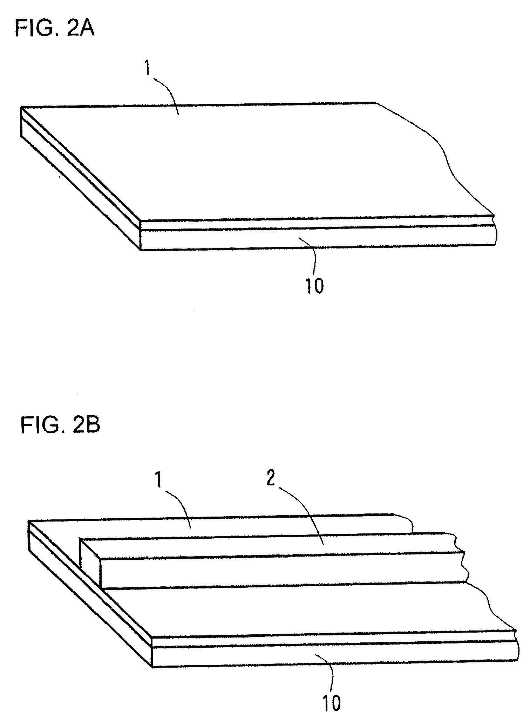

First, a flat base 10 (see FIG. 2A) to be used for formation of an under-cladding layer 1 thereon is prepared.

Exemplary materials for the base 10 include metals such as stainless steel, glass, quartz, silicon and resins.

Then, as shown in a perspective view of FIG. 2A, the under-cladding layer 1 is formed in a flat shape on a surface of the base 10. Exemplary materials for the under-cladding layer 1 include photosensitive resins and thermosetting resins. The formation of the under-cladding layer 1 may be achieved by a formation method suitable for the material to be used. The under-cladding layer 1 has a thickness of, for example, 1 to 50 µm.

Next, as shown in a perspective view of FIG. 2B, a core 2 is formed in a linear shape on a surface of the under-cladding layer 1 as projecting from the surface of the under-cladding layer 1. The formation of the core 2 is achieved, for example, by a photolithography method using a photosensitive resin. The core 2 has a height and a width of, for example, 5 to 100 µm.

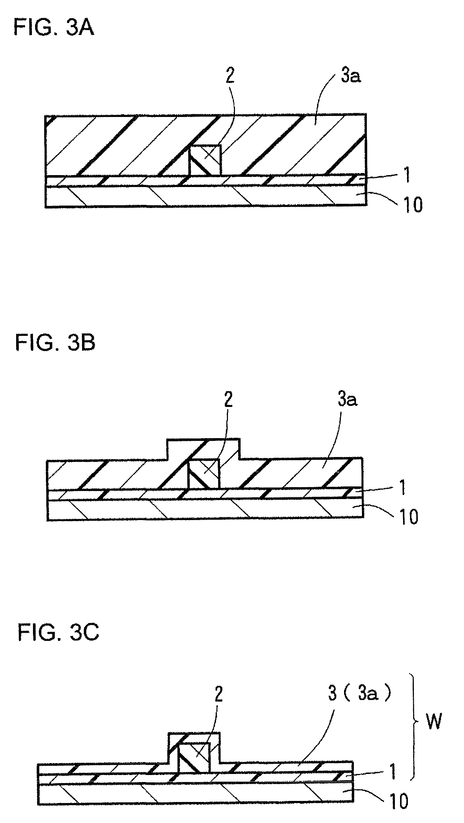

Then, as shown in transverse sectional views of FIGS. 3A to 3C, an over-cladding layer 3 (see FIG. 3C) is formed on the surface of the under-cladding layer 1 and side surfaces and a top surface of the core 2. More specifically, a photosensitive resin having a solvent content (25 to 95 wt%) that is higher than the solvent content of a conventional photosensitive resin (0 to 20 wt%) is first prepared for the formation of the over-cladding layer. Then, as shown in FIG. 3A, the photosensitive resin is applied to a thickness slightly greater than the height of the core 2 on the surface of the under-cladding layer 1 and the surfaces of the core 2 to form a photosensitive resin layer 3a. Thereafter, the photosensitive resin layer 3a is subjected to a drying step (see FIG. 3B), an exposure step, a PEB step (see FIG. 3C), a developing step and a curing step in this order, whereby the over-cladding layer 3 is formed as having a projection portion which covers the core 2 and the flat portion as shown in FIG. 3C. Particularly in the drying step and the PEB step, the solvent contained in the photosensitive resin layer 3a is evaporated, so that the thickness of the photosensitive resin layer 3a is reduced. The thickness reduction percentage is constant throughout the photosensitive resin layer 3a. Therefore, a portion of the photosensitive resin layer 3a present on the surface of the under-cladding layer 1 has a greater original thickness and correspondingly has a greater thickness reduction amount. A portion of the photosensitive resin layer 3a present on the surfaces of the core 2 has a smaller original thickness and correspondingly has a smaller thickness reduction amount. Thus, the over-cladding layer 3 is formed as having the projection as described above. The over-cladding layer 3 has a thickness (film thickness) of, for example, 1 to 50 µm. In this manner, the optical waveguide W is fabricated on the surface of the base 10.

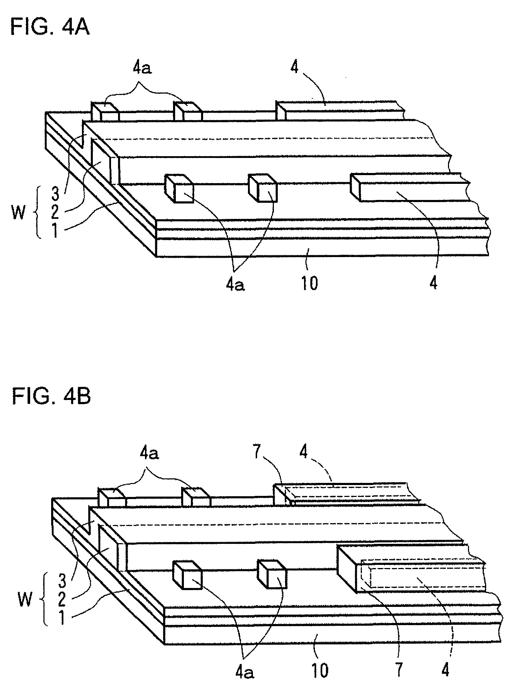

Next, as shown in a perspective view of FIG. 4A, an electric circuit 4 is formed on flat surface portions of the over-cladding layer of the optical waveguide W on opposite sides of the projection of the over-cladding layer, for example, by a semi-additive method.

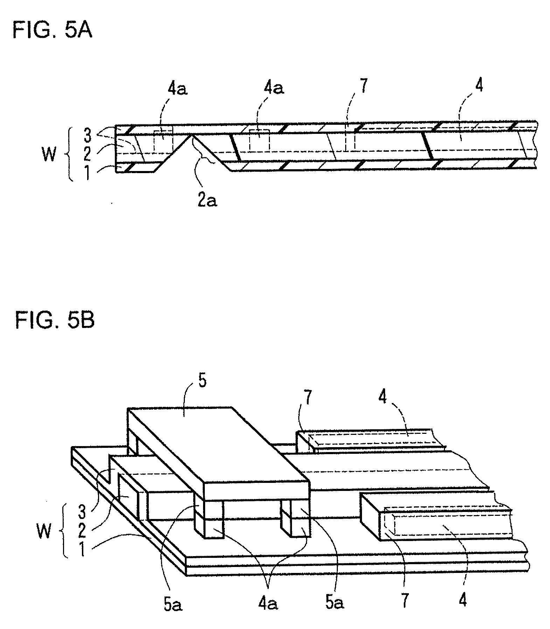

In turn, as shown in a perspective view of FIG. 4B, a photosensitive insulative resin is applied onto a portion of the electric circuit 4 excluding an optical element mounting portion (mounting pads 4a) on which an optical element 5 (see FIG. 5B) is to be mounted. Then, a cover-lay 7 is formed from the photosensitive insulative resin by a photolithography method.

Subsequently, as shown in a longitudinal sectional view of FIG. 5A, the base 10 (see FIG. 4B) is removed from the back surface of the under-cladding layer 1, and then a predetermined portion of the core 2 is cut off from a back side of the under-cladding layer 1 by means of a cutting blade or by a laser processing method. Thus, a light reflecting surface 2a inclined at 45 degrees with respect to an axis of the core 2 is formed.

Then, as shown in a perspective view of FIG. 5B, lower end surfaces of electrodes 5a of the optical element 5 are brought into abutment against top surfaces of predetermined portions (mounting pads 4a) of the electric circuit 4, whereby the optical element 5 is mounted on the electric circuit 4. With the optical element 5 thus mounted, the center portion of the optical element 5 is positioned above the projection of the over-cladding layer 3 such that a lower surface of the optical element is spaced a predetermined distance L from the projection (see FIG. 1C). The distance L is 0.1 to 20 µm as described above.

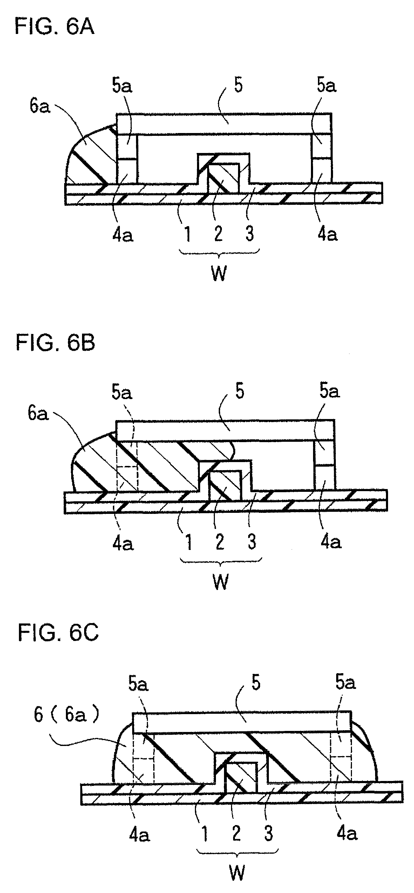

Thereafter, as shown in a transverse sectional view of FIG. 6A, a liquid resin 6a (a material for a sealing resin 6) is injected from a peripheral edge of the mounting portion by means of a liquid supplying device such as a pipette. Since a space defined between the surface of the projection of the over-cladding layer 3 and the center portion of the optical element 5 has a small size, the small space and a peripheral portion around the space are substantially simultaneously filled with the liquid resin 6a by a capillary phenomenon as shown in the transverse sectional view of FIG. 6B. After a space defined between the surface of the over-cladding layer 3 and the optical element 5 is entirely filled with the liquid resin 6a as shown in the transverse sectional view of FIG. 6C, the liquid resin 6a is cured by heat or the like to form the sealing resin 6. Thus, the opto-electric hybrid module is produced.

In the production method for the opto-electric hybrid module, as described above, the peripheral portion and the space defined between the surface of the projection of the over-cladding layer 3 and the center portion of the optical element 5 are substantially simultaneously filled with the liquid resin 6a (the material for the sealing resin 6) by the capillary phenomenon. Therefore, no air bubbles are present in the sealing resin 6 formed by curing the liquid resin 6a. As a result, the opto-electric hybrid module thus produced ensures proper light transmission and, hence, ensures higher light transmission efficiency without unwanted light refraction and irregular light reflection in the sealing resin 6.

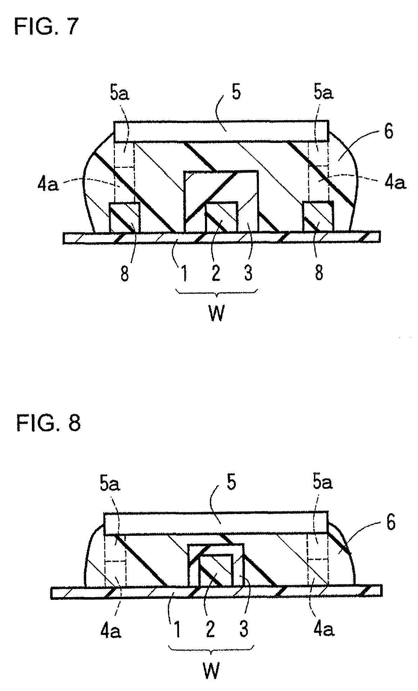

FIG. 7 is a transverse sectional view schematically illustrating an opto-electric hybrid module according to a second embodiment of the present invention. In the opto-electric hybrid module according to this embodiment, non-light-path dummy cores 8 not serving as light paths are provided on opposite sides of the light-path core 2 in spaced relation to the light-path core 2, and an electric circuit 4 is provided on top surfaces of the dummy cores 8. The over-cladding layer 3 is provided neither on the surfaces of the dummy cores 8 nor on the surface of the under-cladding layer 1, but covers the side surfaces and the top surface of the light-path core 2, whereby the optical waveguide is formed as having a projection because the over-cladding layer 3 has a portion which covers the light-path core 2. The second embodiment has substantially the same construction as the first embodiment except for the aforementioned arrangement, and like components are designated by like reference characters. The second embodiment provides the same effects as the first embodiment.

The dummy cores 8 are formed from the same material as the light-path core 2 by the photolithography method when the light-path core 2 is formed. The dummy cores 8 may each have the same dimensions as the light-path core 2, or may each have dimensions different from those of the light-path core 2. In order to reduce the size of the space defined between the surface of the projection of the over-cladding layer 3 and the center portion of the optical element 5 to suppress formation of air bubbles in the sealing resin 6, the dummy cores 8 preferably each have a smaller height. Alternatively, the size of the space may be reduced by increasing the thickness of a portion of the over-cladding layer 3 present on the top surface of the light-path core 2.

In the second embodiment, the electric circuit 4 may be formed before the formation of the over-cladding layer 3 after the formation of the light-path core 2 and the dummy cores 8. Further, the formation of the cover-lay 7 may precede the formation of the over-cladding layer 3. In this case, the portion of the electric circuit 4 excluding the mounting pads 4a may be covered with the over-cladding layer 3 rather than with the cover-lay 7. That is, when the over-cladding layer 3 is formed, the portion of the electric circuit 4 as well as the light-path core 2 may be covered with the over-cladding layer 3.

FIG. 8 is a transverse sectional view schematically illustrating an opto-electric hybrid module according to a third embodiment of the present invention. In the opto-electric hybrid module according to this embodiment, the electric circuit 4 is provided on the surface of the under-cladding layer 1 on opposite sides of the light-path core 2. The over-cladding layer 3 is not provided on the surface of the under-cladding layer 1, but covers the side surfaces and the top surface of the light-path core 2, whereby the optical waveguide is formed as having a projection because the over-cladding layer 3 has a portion which covers the light-path core 2. The third embodiment has substantially the same construction as the first embodiment except for the aforementioned arrangement, and like components are designated by like reference characters. The third embodiment provides the same effects as the first embodiment. Particularly, the size of the space defined between the surface of the projection of the over-cladding layer 3 and the center portion of the optical element 5 can be further reduced, further suppressing the formation of air bubbles in the sealing resin 6.

In the third embodiment, the electric circuit 4 may be formed before the formation of the core 2 after the formation of the under-cladding layer 1. Further, the formation of the cover-lay 7 may precede the formation of the core 2. In this case, the portion of the electric circuit 4 excluding the mounting pads 4a may be covered with the core 2 and/or the over-cladding layer 3 rather than with the cover-lay 7. That is, when the core 2 is formed, the portion of the electric circuit 4 may be covered with the core 2 and, when the over-cladding layer 3 is formed, a portion of the core 2 covering the portion of the electric circuit 4 may be covered with the over-cladding layer 3.

In the first to third embodiments, the projection portion of the over-cladding layer 3 has a flat top surface (see FIG. 3C), but may have a domed top surface which serves as a lens curve surface 3b as shown in a transverse sectional view of FIG. 9A. Where the top surface serves as the lens curve surface 3b, light emitted from the light emitting portion of the optical element 5 can be converged by the action of the lens curve surface 3b and, in this state, can be transmitted to the core 2. Further, light outputted from the core 2 can be converged by the action of the lens curve surface 3b and, in this state, can be received by the light receiving portion of the optical element 5.

As shown in a transverse sectional view of FIG. 9B, the photosensitive resin layer 3a for the formation of the over-cladding layer 3 is formed as having a greater thickness than in the aforementioned embodiments (see FIG. 3A) by applying the photosensitive resin in a greater amount for the formation of the lens curve surface 3b. That is, the formation of the thicker photosensitive resin layer 3a increases the thickness reduction amount when the thickness of the photosensitive resin layer 3a is reduced in the subsequent steps including the drying step (see FIGS. 3B and 3C). Thus, the top surface of the projection is formed into a dome shape (lens curve surface 3b).

Next, examples of the present invention will be described in conjunction with a conventional example. However, it should be understood that the present invention be not limited to the inventive examples.

### EXAMPLES

### [Example 1]

An opto-electric hybrid module was produced in the same manner as in the first embodiment (see FIGS. 1A to 1C). A photosensitive resin having a solvent content of 80 wt% was used as the material for the over-cladding layer. A mixture containing an epoxy resin and an acid anhydride curing agent in a weight ratio of 100 : 110 was used as the material for the sealing resin. In the opto-electric hybrid module thus produced, a distance between the surface of the projection of the over-cladding layer and a lower surface of the center portion of the optical element was 15 µm.

### [Example 2]

An opto-electric hybrid module was produced in the same manner as in the second embodiment (see FIG. 7). The material for the over-cladding layer and the material for the sealing resin were the same as those used in Example 1. In the opto-electric hybrid module thus produced, a distance between the surface of the projection of the over-cladding layer and a lower surface of the center portion of the optical element was 10 µm.

### [Example 3]

An opto-electric hybrid module was produced in the same manner as in the third embodiment (see FIG. 8). The material for the over-cladding layer and the material for the sealing resin were the same as those used in Example 1. In the opto-electric hybrid module thus produced, a distance between the surface of the projection of the over-cladding layer and a lower surface of the center portion of the optical element was 5 µm.

### [Conventional Example]

An opto-electric hybrid module in which an over-cladding layer had a flat surface was produced (see FIG. 10). A photosensitive resin having a solvent content of 20 wt% was used as the material for the over-cladding layer. The material for the sealing resin was the same as that used in Example 1. In the opto-electric hybrid module thus produced, a distance between the surface of the over-cladding layer and a lower surface of the center portion of the optical element was 40 µm.

[Presence of Air Bubbles in Sealing Resin] The sealing resins of the opto-electric hybrid modules of Examples 1 to 3 and Conventional Example were each observed by means of a microscope to check whether air bubbles were present in the sealing resin. As a result, no air bubbles were present in the sealing resins in Examples 1 to 3 , but air bubbles were present in the sealing resin in Conventional Example.

While specific forms of the embodiments of the present invention have been shown in the aforementioned inventive examples, the inventive examples are merely illustrative of the invention but not limitative of the invention. It is contemplated that various modifications apparent to those skilled in the art could be made within the scope of the invention.

The present invention is applicable to a case in which the opto-electric hybrid module is imparted with an increased light transmission efficiency for light transmission between the optical waveguide and the optical element by preventing air bubbles from being contained in the sealing resin which seals the space defined between the optical waveguide and the optical element.

### REFERENCE SIGNS LIST

W: OPTICAL WAVEGUIDE
2: CORE
3: OVER-CLADDING LAYER
4: ELECTRIC CIRCUIT
4a: MOUNTING PAD
5: OPTICAL ELEMENT
6: SEALING RESIN

## Claims

1. An opto-electric hybrid module comprising:
an optical waveguide;
an electric circuit provided directly on the optical waveguide;
an optical element mounted on the electric circuit; and
a sealing resin which seals a space defined between the optical element and the optical waveguide;
wherein the optical waveguide includes an under-cladding layer, a linear light-path core provided on a surface of the under-cladding layer as projecting from the surface of the under-cladding layer, and an over-cladding layer having a portion which covers side surfaces and a top surface of the projecting core;
wherein the optical waveguide has a projecting portion; and
wherein the optical element is positioned above a portion of the over-cladding layer which covers the top surface of the core, and is spaced a predetermined distance from the portion of the over-cladding layer.
